# EUROPEAN PATENT SPECIFICATION

(11) **EP 2 759 205 B1**
(45) Date of publication and mention of the grant of the patent: **22.07.2015**
(21) Application number: 14152652.5
(22) Date of filing: 27.01.2014
(51) Int. Cl.: A22C 17/00, B26D 1/143, B26D 1/153, B26D 5/22, B26D 7/06, B26D 5/02

(54) **Cutting device for cutting meat into required portions**
Schneidvorrichtung zum Schneiden von Fleisch in gewünschten Portionen
Dispositif de coupe servant à couper de la viande en portions requises

(30) Priority: 29.01.2013 BE 201300056
(43) Date of publication of application: 30.07.2014
(73) Proprietor: Marelec Construct NV, 8620 Nieuwpoort (BE)
(72) Inventor: Demuynck, Lieven, 8470 Gistel (BE); Rommelaere, Piet, 8670 Koksijde (BE)
(74) Representative: Hostens, Veerle

(56) References cited:
- WO-A1-94/26479
- US-A1- 2004 031 363

## Description

This invention relates to a cutting device for cutting meat into required portions, comprising:
- a cutting blade;
- a feeding conveyor belt for feeding the meat to the cutting blade;
- a removal conveyor belt for removing the meat from the cutting blade;
- setting means for setting the angle of the cutting blade in relation to the surface of an aforementioned conveyor belt, by rotating the blade in relation to an angle-setting axle which extends across the direction of conveyance of the meat;
- and displacement means for the adjustment of an aforementioned conveyor belt, which is designed as an adjustable conveyor belt, in the direction of conveyance of the meat.

Cutting devices of this type, see e.g. document WO-A-94/026479, are used in the meat, poultry and fish industry to cut the meat (this is furthermore understood to include poultry or fish also) which is to be cut vertically or at a certain angle in relation to the vertical direction into required portions. Required portions of this type are usually portions of equal thickness or of equal weight.

In the case of cutting devices of this type, the product to be cut is fed on the feeding conveyor belt towards the cutting blade. One or more three-dimensional laser scanners, which measure the product and calculate the volume thereof, are usually set up above the feeding conveyor belt. A specifically defined weight or a specifically defined thickness, corresponding to the required portions, is set in the control program of the cutting device. This control program then calculates where cutting must take place in order to meet the defined requirements.

During cutting, the cutting blade is moved downwards, from a position above the conveyor belts and above the meat to be cut, to between the feeding conveyor belt and the removal conveyor belt. In the case of cutting devices of this type, the cutting blade is usually set up rotating around a rotation axle which extends according to the direction of conveyance, so that the cutting blade can make a cutting rotating movement around this rotation axle during this downward movement.

In order to allow the cutting blade to be able to cut the meat between the two conveyor belts, the conveyor belts must be set up at a certain distance from one another. The distance between the cutting blade and the two conveyor belts in the horizontal direction is selected in such a way that it is sufficiently great so that the cutting blade cannot damage the conveyor belts, but sufficiently small so that the meat is transferred smoothly from the feeding conveyor belt onto the removal conveyor belt without small pieces falling between the conveyor belt during the cutting.

Recent developments permit the cutting blade of a cutting device of this type to be set at a certain angle in relation to the vertical direction (direction perpendicular to the feeding conveyor belt). For this purpose, the cutting device is then provided with setting means for setting the angle of the cutting blade in relation to the surface of an aforementioned conveyor belt, by rotating the blade in relation to an angle-setting axle which extends across the direction of conveyance of the meat.

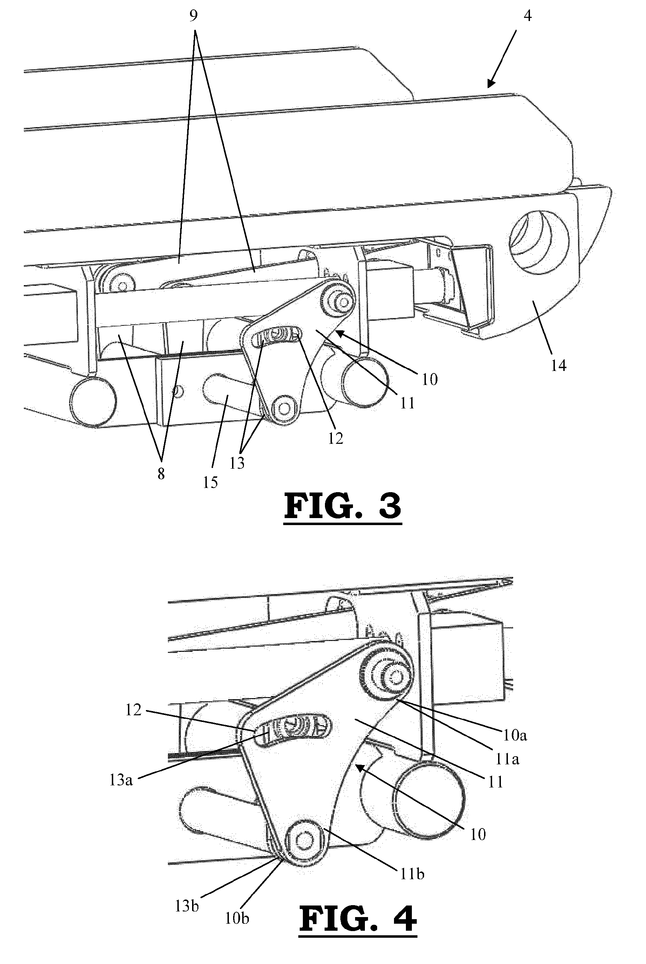

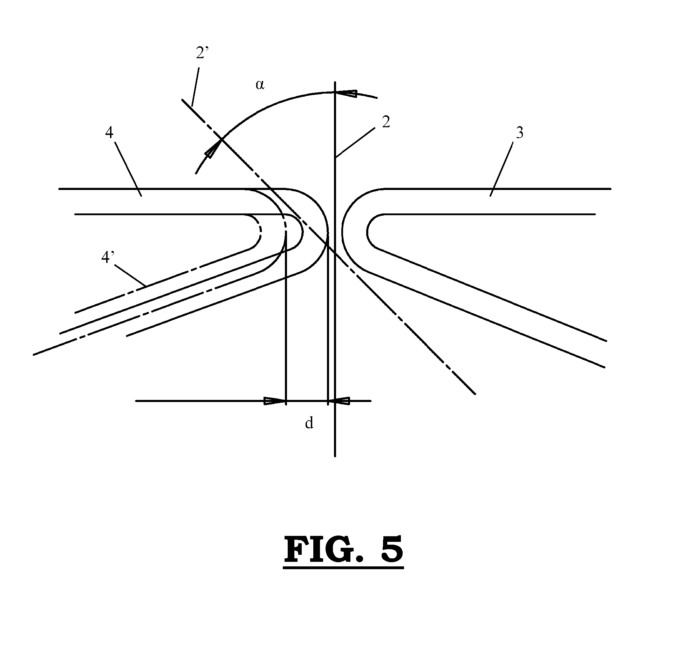

As shown schematically in Figure 5, wherein the cutting blade (2) is shown as an unbroken line in a first position wherein it extends vertically in relation to the two conveyor belts (3, 4), and as a chain-dotted line (2') in a second position wherein it is set at an angle (α) in relation to this vertical direction, a cutting blade (2) which is set at such an angle (α) occupies more space in the horizontal direction between the conveyor belts (3, 4). In Figure 5, the cutting blade (2) has been set up in such a way that, when the aforementioned angle (α) is set, the cutting blade (2) is always located equally far from the feeding conveyor belt (3). However, following the setting of a certain angle (α), the cutting blade (2) will then touch the removal conveyor belt (4), and will not be able to be further rotated at a greater angle (α). In order to make an angle setting of this type possible, the removal conveyor belt (4) will be adjusted (4') in the horizontal direction over a distance (d) in order to enlarge the opening between the feeding conveyor belt (3) and the removal conveyor belt (4), so that the distance between the cutting blade (2) and the two conveyor belts (3, 4) in the horizontal direction substantially so that the cutting blade (2) cannot damage the conveyor belts (3, 4), but remains sufficiently small so that the meat is transferred smoothly from the feeding conveyor belt (3) onto the removal conveyor belt (4) without small pieces falling between the conveyor belts (3, 4) during the cutting. In Figure 4, the removal conveyor belt (4), after the adjustment thereof, is shown as a chain-dotted line (4').

It is also possible for the cutting blade to be set up so that, when the angle thereof is set, the cutting blade always remains set up equally far from the removal conveyor belt. In this case, the feeding conveyor belt will be adjusted so that it remains at a required distance from the cutting blade.
It is also possible to choose not to set up the cutting blade at a fixed distance from one of the two conveyor belts and to adjust the two conveyor belts when setting the angle of the cutting blade.

The setting of one or more of the conveyor belts when setting the angle of the cutting blade is always carried out manually. This is time-consuming and requires special attention of trained technical personnel. In the event of incorrect adjustment, on the one hand the risk of damage namely to one of the conveyor belts or to the cutting blade is great or, on the other hand, the risk of poor product guidance, as a result of which small pieces fall between the conveyor belts during the cutting, is great.

The object of this invention is to remedy the aforementioned disadvantages of the existing setting facilities.

This object of the invention is achieved by providing a cutting device for cutting meat into required portions, comprising:
- a cutting blade;
- a feeding conveyor belt for feeding the meat to the cutting blade;
- a removal conveyor belt for removing the meat from the cutting blade;
- setting means for setting the angle of the cutting blade in relation to the surface of an aforementioned conveyor belt, by rotating the cutting blade in relation to an angle-setting axle which extends across the direction of conveyance of the meat;
- displacement means for the adjustment of an aforementioned conveyor belt, which is designed as an adjustable conveyor belt, in the direction of conveyance of the meat;
- and transfer means for transferring the rotation movement of the cutting blade, when the angle of this cutting blade is set by means of setting means, to an adjustment movement of the adjustable conveyor belt, when this conveyor belt is adjusted by means of the displacement means.

By providing transfer means of this type, it can be ensured that the setting of the cutting blade and the adjustable conveyor belt always takes place in a certain manner, wherein the intervals between the cutting blade and the two conveyor belts always remain optimized in every position of the cutting blade.

In the case of a specific cutting device according to this invention, the transfer means comprise:
- a first driving rod which is pivotably connected on its first end to the angle-setting axle;
- a second driving rod which is pivotably connected on its first end to the displacement means;
- a lever which is pivotably connected on its first end to the second end of the second driving rod;
- a cam which is pivotably connected on its first end to the second end of the first driving rod and is rigidly connected on its second end to the second end of the lever.

If a different type of meat has to be cut with the same cutting device, or if larger, smaller, heavier or lighter portions have to be cut with the same cutting device, it may be required that the distance between the adjustable conveyor belt and the cutting blade is adjusted accordingly. For this purpose, in the case of an aforementioned cutting device according to this invention, the cam may even more specifically also comprise a basic body which extends between the first end and the second end of the cam, wherein the first end of this basic body forms the first end of the cam, wherein this basic body comprises a groove centrally between its first end and its second end and wherein the cam comprises a setting arm which is adjustably attachable on its first end in the aforementioned groove and is rigidly connected on its second end to the second end of the lever and is pivotably connected to the second end of the basic body.

The displaceable conveyor belt of a specific cutting device of this type preferably comprises an adjustable nozzle which forms part of the displacement means, wherein the second driving rod of the transfer means is pivotably connected on its first end to this adjustable nozzle.

The cam of a specific embodiment of a cutting device described above is furthermore preferably rigidly connected to the lever by means of a rotation axle which is rigidly connected to the cam on the one hand and is rigidly connected to the lever on the other hand, wherein this rotation axle extends across the cam and across the lever.

In a preferred embodiment of a cutting device according to this invention, the cutting blade is set up rotatably in relation to a rotation axle. If the cutting blade extends substantially in a vertical area above the conveyor belt, this rotation axle extends according to the direction of conveyance of the meat.

The adjustable conveyor belt of a cutting device according to this invention is preferably designed as a modular belt. A modular belt of this type is easier to implement than an adjustable conveyor belt.

The transfer means of a cutting device according to this invention are preferably set up in such a way that the distance between the cutting blade and the adjustable conveyor belt is more or less constant in each position.

This invention is now explained in detail with reference to the following detailed description of a cutting device according to this invention. The purpose of this description is exclusively to provide illustrative examples and to indicate further advantages and special features of this cutting device, and cannot therefore be interpreted as a limitation of the scope of application of the invention or of the patent rights asserted in the claims.

In this detailed description, reference numbers are used to refer to the drawings attached hereto, in which:
- ***Figure 1*** shows a cutting device according to this invention in a perspective view;

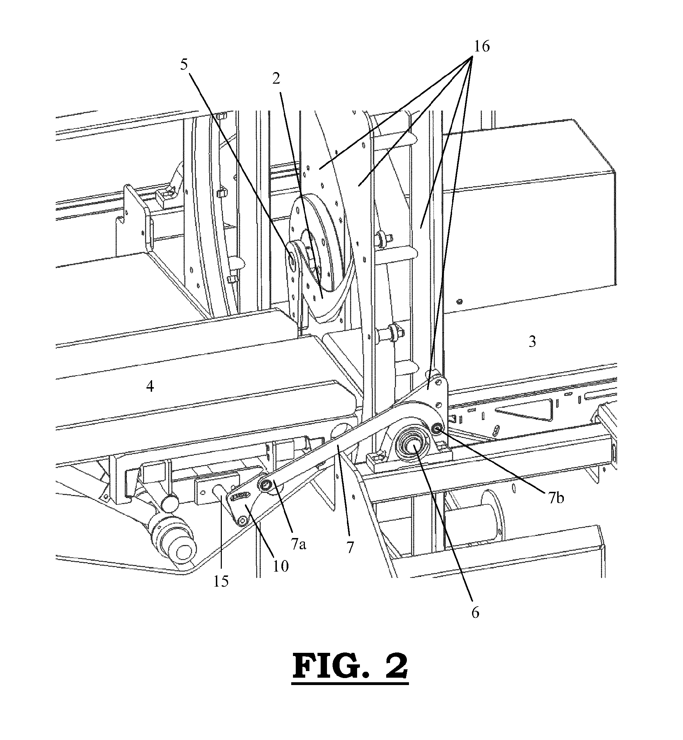

- ***Figure 2*** shows a more detailed perspective view of a part of the cutting device from Figure 1 in the area of the transfer means;
- ***Figure 3*** shows a more detailed perspective view of a part of the cutting device from Figure 1 in the area of the displacement means;
- ***Figure 4*** shows a more detailed perspective view of a part of the cutting device from Figure 1 in the area of the cam;
- ***Figure 5*** shows schematically the coupled displacement of the cutting blade and the feeding conveyor belt from the cutting device from Figure 1.

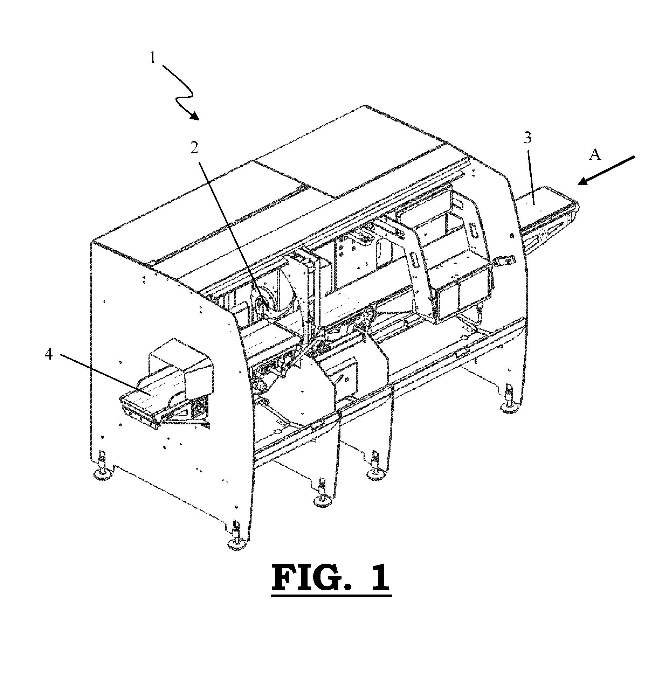

The cutting device (1) shown in the figures comprises a cutting blade (2) in order to cut meat into required portions herewith. The cutting blade (2) is set up between a feeding conveyor belt (3) and a removal conveyor belt (4). With the feeding conveyor belt (3), the meat to be cut is brought to the cutting blade (2), where it is cut into the required portions with the cutting blade (2), after which the meat cut up into portions is removed with the removal conveyor belt (4) from the cutting blade (2). The direction of conveyance (A) of the meat is indicated by an arrow in Figure 1.

The cutting blade (2) is set up rotatably around its rotation axle (5). This rotation axle (5) extends in these figures according to the direction of conveyance (A) of the meat. When the meat is cut, the cutting blade (2) rotates around its rotation axle (5) and the cutting blade (2) is thus brought into a rotating movement from above the meat to between the two conveyor belts (3, 4).

In the figures, the frame (16) extends substantially vertically in relation to the area of the conveyor belts (3, 4). The cutting blade (2) which is suspended in this frame (16) similarly extends substantially vertically in relation to the area of the conveyor belts (3, 4), across the direction of conveyance (A) of the meat. However, the frame (16), and therefore the cutting blade (2) also, can also be set at an angle (α) in relation to this vertical direction. The frame (16) is set up pivotably in relation to an angle-setting axle (6) for this purpose. This angle-setting axle (6) extends across the direction of conveyance (A) of the meat. The cutting blade (2) rotates together with the pivoting of the frame (16) around the angle-setting axle (6) at the same angle (α) as the frame (16) around this angle-setting axle (6). In this way, the cutting blade (2) can be rotated at an angle of 30° or more.

As shown schematically in Figure 5, the distance between the cutting blade (2), in its lowermost position in the frame (16) and at each set angle (α), remains constant in relation to the feeding conveyor belt (3). In order to prevent the cutting blade (2, 2') from touching or cutting the feeding conveyor belt (4, 4') at a certain angle (α), the feeding conveyor belt (4) is designed as adjustable over a certain distance (d) in the horizontal direction. The feeding conveyor belt (4) comprises an adjustable nozzle (14) for this purpose. The feeding conveyor belt (4) is designed as a modular belt in order to enable a simple adjustability.
According to the invention, the cutting device (1) is provided with transfer means (7, 8, 9, 10) in order to ensure that, if the cutting blade (2) is displaced (2') at an angle (α) due to the displacement of the frame (16), the removal conveyor belt (4) is adjusted (4') in the horizontal direction over a corresponding distance (d) in order to enlarge the opening between the feeding conveyor belt (3) and the removal conveyor belt (4), so that the distance between the cutting blade (2) and the two conveyor belts (3, 4) in the horizontal direction is sufficiently great so that the cutting blade (2) cannot damage the conveyor belts (3, 4), but remains sufficiently small so that the meat is transferred smoothly from the feeding conveyor belt (3) onto the removal conveyor belt (4) without small pieces falling between the conveyor belts (3, 4) during the cutting. With the setting of the angle (α) and the corresponding adjustment of the removal conveyor belt (4), it is ensured in this embodiment that the distance between the cutting blade (2) (viewed in its lowermost position in the frame (16)) and the conveyor belts (3, 4) always remains more or less equal.
In alternative embodiments, it is also possible for the cutting blade (2) to be set up so that, when the angle (α) is set, the cutting blade (2) always remains set up equally far from the removal conveyor belt (4). In this case, the feeding conveyor belt (3) will be adjusted so that it remains at a required distance from the cutting blade (2).
It is also possible to choose not to set up the cutting blade (2) at a fixed distance from one of the two conveyor belts (3, 4) and to adjust the two conveyor belts (3, 4) when setting the angle (α) of the cutting blade (2).

The transfer means (7, 8, 9, 10) of the embodiment shown comprise a first driving rod (7) which is pivotably connected on its first end (7b) to the angle-setting axle (6). This first driving rod (7) is pivotably connected on its second end (7a) to the first end (10a) of a cam (10). The second end (10b) of this cam (10) is rigidly connected by means of a rotation axle (15) across this cam (10) to the second end of a lever (8) which similarly extends across this rotation axle (15) and is pivotably connected on its first end to a second driving rod (9). This second driving rod (9) is then in turn pivotably connected to the adjustable nozzle (14) of the removal conveyor belt (4).

If a different type of meat has to be cut with the same cutting device (1), or if larger, smaller, heavier or lighter portions have to be cut with the same cutting device (1), it may be required that the distance between the removal conveyor belt (4) and the cutting blade (2) is adjusted accordingly. For this purpose, the cam (10) comprises a basic body (11) which extends between the first end (10a) and the second end (10b) of the cam (10). The first end (11a) of this basic body (11) forms the first end (10a) of the cam (10). Furthermore, this basic body (11) comprises a groove (12) centrally between its first end (11a) and its second end (11b). In addition, the cam (10) comprises a setting arm (13) which is adjustably attachable on its first end (13a) in the aforementioned groove (12) and is rigidly connected on its second end (13b) to the second end (8b) of the lever (8) and is pivotably connected to the second end (11b) of the basic body (11). The distance between the cutting blade (2) and the removal conveyor belt (4) is thus set by adjusting the first end (13a) of the setting arm (13) in the groove (12).

## Claims

1. Cutting device (1) for cutting meat into required portions, comprising:
- a cutting blade (2);
- a feeding conveyor belt (3) for feeding the meat to the cutting blade (2);
- a removal conveyor belt (4) for removing the meat from the cutting blade (2);
- setting means (5, 6, 16) for setting the angle (90°-α) of the cutting blade (2) in relation to the surface of an aforementioned conveyor belt (3), by rotating the cutting blade (2) in relation to an angle-setting axle (6) which extends across the direction of conveyance (A) of the meat.
- displacement means (14) for the adjustment of an aforementioned conveyor belt (4), which is designed as an adjustable conveyor belt (4), in the direction of conveyance (A) of the meat;
**characterized in that** the cutting device (1) comprises transfer means (7, 8, 9, 10) for transferring the rotation movement of the cutting blade (2) when the angle (90°-α) of this cutting blade (2) is set by means of the setting means, to an adjustment movement of the adjustable conveyor belt (4) when this conveyor belt (4) is adjusted by means of the displacement means (14).

2. Cutting device (1) according to Claim 1, **characterized in that** the transfer means (7, 8, 9, 10):
- comprise a first driving rod (7) which is pivotably connected on its first end (7b) to the angle-setting axle (6);
- comprise a second driving rod (9) which is pivotably connected on its first end to the displacement means (14);
- comprise a lever (8) which is pivotably connected on its first end to the second end of the second driving rod (9);
- comprise a cam (10) which is pivotably connected on its first end (10a) to the second end (7a) of the first driving rod (7) and is rigidly connected on its second end (10b) to the second end of the lever (8).

3. Cutting device according to Claim 2, **characterized in that** the cam (10) comprises a basic body (11) which extends between the first end (10a) and the second end (10b) of the cam (10), wherein the first end (11a) of this basic body (11) forms the first end (10a) of the cam (10) and wherein this basic body (11) comprises a groove (12) centrally between its first end (11a) and its second end (11b) and **in that** the cam (10) comprises a setting arm (13) which is adjustably attachable on its first end (13a) in the aforementioned groove (12) and is rigidly connected on its second end (13b) to the second end of the lever (8) and is pivotably connected to the second end (11b) of the basic body (11).

4. Cutting device (1) according to Claim 2 or 3, **characterized in that** the displaceable conveyor belt (4) comprises an adjustable nozzle (14) which forms part of the displacement means (14, 15), wherein the second driving rod (9) of the transfer means (7, 8, 9, 10) is pivotably connected on its first end (9a) to this adjustable nozzle (14).

5. Cutting device (1) according to one of Claims 2 to 4, **characterized in that** the cam (10) is rigidly connected to the lever (8) by means of a rotation axle (15) which is rigidly connected to the cam (10) on the one hand and is rigidly connected to the lever (8) on the other hand, wherein this rotation axle (15) extends across the cam (10) and across the lever (8).

6. Cutting device (1) according to one of the preceding claims, **characterized in that** the cutting blade (2) is set up rotatably in relation to a rotation axle (5).

7. Cutting device (1) according to one of the preceding claims, **characterized in that** the adjustable conveyor belt (4) is designed as a modular belt.

8. Cutting device (1) according to one of the preceding claims, **characterized in that** the transfer means (7, 8, 9, 10) are set up in such a way that the distance between the cutting blade (2) and the adjustable conveyor belt (4) is more or less constant in each position.

## Patentansprüche

1. Schneidvorrichtung (1) zum Schneiden von Fleisch in erforderliche Portionen, umfassend:
- eine Schneidklinge (2),
- ein Zuführungstransportband (3) zum Zuführen des Fleisches zur Schneidklinge (2),
- ein Entnahmetransportband (4) zum Entnehmen des Fleisches von der Schneidklinge (2),
- Einstellmittel (5, 6, 16) zum Einstellen des Winkels (90°-α) der Schneidklinge (2) im Verhältnis zur Oberfläche eines genannten Transportbandes (3) durch Drehen der Schneidklinge (2) im Verhältnis zu einer Winkeleinstellungsachse (6), die quer zur Richtung des Transportes (A) des Fleisches verläuft,
- Verlagerungsmittel (14) zur Justierung eines genannten Transportbandes (4), das als justierbares Transportband (4) gestaltet ist, in der Richtung des Transportes (A) des Fleisches,
**dadurch gekennzeichnet, dass** die Schneidvorrichtung (1) Übertragungsmittel (7, 8, 9, 10) umfasst zum Übertragen der Drehbewegung der Schneidklinge (2), wenn der Winkel (90°-α) dieser Schneidklinge (2) mit Hilfe der Einstellmittel eingestellt wird, auf eine Justierungsbewegung des justierbaren Transportbandes (4), wenn dieses Transportband (4) mit Hilfe der Verlagerungsmittel (14) justiert wird.

2. Schneidvorrichtung (1) nach Anspruch 1, **dadurch gekennzeichnet, dass** die Übertragungsmittel (7, 8, 9, 10):
- eine erste Antriebsstange (7) umfassen, die an ihrem ersten Ende (7b) schwenkbar mit der Winkeleinstellungsachse (6) verbunden ist,
- eine zweite Antriebsstange (9) umfassen, die an ihrem ersten Ende schwenkbar mit den Verlagerungsmitteln (14) verbunden ist,
- einen Hebel (8) umfassen, der an seinem ersten Ende schwenkbar mit dem zweiten Ende der zweiten Antriebsstange (9) verbunden ist,
- einen Mitnehmer (10) umfasst, der an seinem ersten Ende (10a) schwenkbar mit dem zweiten Ende (7a) der ersten Antriebsstange (7) verbunden ist und an seinem zweiten Ende (10b) starr mit dem zweiten Ende des Hebels (8) verbunden ist.

3. Schneidvorrichtung nach Anspruch 2, **dadurch gekennzeichnet, dass** der Mitnehmer (10) einen Grundkörper (11) umfasst, der zwischen dem ersten Ende (10a) und dem zweiten Ende (10b) des Mitnehmers (10) verläuft, wobei das erste Ende (11a) dieses Grundkörpers (11) das erste Ende (10a) des Mitnehmers (10) bildet und wobei dieser Grundkörper (11) mittig zwischen seinem ersten Ende(11a) und seinem zweiten Ende (11b) eine Kehle (12) umfasst, und dass der Mitnehmer (10) einen Einstellarm (13) umfasst, der an seinem ersten Ende (13a) justierbar in der genannten Kehle (12) anbringbar ist und an seinem zweiten Ende (13b) starr mit dem zweiten Ende des Hebels (8) verbunden ist und schwenkbar mit dem zweiten Ende (11b) des Grundkörpers (11) verbunden ist.

4. Schneidvorrichtung (1) nach Anspruch 2 oder 3, **dadurch gekennzeichnet, dass** das verlagerbare Transportband (4) ein justierbares Mundstück (14) umfasst, das einen Teil der Verlagerungsmittel (14, 15) bildet, wobei die zweite Antriebsstange (9) der Übertragungsmittel (7, 8, 9, 10) an ihrem ersten Ende (9a) schwenkbar mit diesem justierbaren Mundstück (14) verbunden ist.

5. Schneidvorrichtung (1) nach einem der Ansprüche 2 bis 4, **dadurch gekennzeichnet, dass** der Mitnehmer (10) mit Hilfe einer Drehachse (15), die einerseits starr mit dem Mitnehmer (10) verbunden ist und andererseits starr mit dem Hebel (8) verbunden ist, mit dem Hebel (8) verbunden ist, wobei die Drehachse (15) quer zum Mitnehmer (10) und quer zum Hebel (8) verläuft.

6. Schneidvorrichtung (1) nach einem der vorhergehenden Ansprüche, **dadurch gekennzeichnet, dass** die Schneidklinge (2) im Verhältnis zu einer Drehachse (5) drehbar eingerichtet ist.

7. Schneidvorrichtung (1) nach einem der vorhergehenden Ansprüche, **dadurch gekennzeichnet, dass** das justierbare Transportband (4) als modulares Band gestaltet ist.

8. Schneidvorrichtung (1) nach einem der vorhergehenden Ansprüche, **dadurch gekennzeichnet, dass** die Übertragungsmittel (7, 8, 9, 10) derart eingerichtet sind, dass der Abstand zwischen der Schneidklinge (2) und dem justierbaren Transportband (4) an jeder Position mehr oder weniger konstant ist.

## Revendications

1. Dispositif de coupe (1) pour découper de la viande en portions requises, comprenant :
- une lame de coupe (2) ;
- une courroie transporteuse d'alimentation (3) pour acheminer la viande à la lame de coupe (2) ;
- une courroie transporteuse de retrait (4) pour retirer la viande de la lame de coupe (2) ;
- des moyens de réglage (5, 6, 16) pour régler l'angle (90°-α) de la lame de coupe (2) par rapport à la surface de la courroie transporteuse (3) précitée en faisant tourner la lame de coupe (2) par rapport un axe de réglage d'angle (6) qui s'étend en travers de la direction de transport (A) de la viande ;
- des moyens de déplacement (14) pour l'ajustement de la courroie transporteuse précitée (4), qui est conçu sous la forme d'une courroie transporteuse ajustable (4), dans la direction de transport (A) de la viande ;
**caractérisé en ce que** le dispositif de coupe (1) comprend des moyens de transfert (7, 8, 9, 10) pour transférer le mouvement de rotation de la lame de coupe (2) lorsque l'angle (90°-α) de cette lame de coupe (2) est réglé avec les moyens de réglage, à un mouvement d'ajustement de la courroie transporteuse ajustable (4) lorsque cette courroie transporteuse (4) est ajustée avec les moyens de déplacement (14).

2. Dispositif de coupe (1) selon la revendication 1, **caractérisé en ce que** les moyens de transfert (7, 8, 9, 10) :
- comprennent une première tige d'entraînement (7) qui est raccordée à pivotement, à sa première extrémité (7b), à l'axe de réglage d'angle (6) ;
- comprennent une seconde tige d'entraînement (9) qui est raccordée à pivotement, à sa première extrémité, aux moyens de déplacement (14) ;
- comprennent un levier (8) qui est raccordé à pivotement, à sa première extrémité, à la seconde extrémité de la seconde tige d'entraînement (9) ;
- comprennent une came (10) qui est raccordée à pivotement, à sa première extrémité (10a), à la seconde extrémité de la première tige d'entraînement (7) et est raccordée de manière rigide, à sa seconde extrémité (10b), à la seconde extrémité du levier (8).

3. Dispositif de coupe selon la revendication 2, **caractérisé en ce que** la came (10) comprend un corps de base (11) qui s'étend entre la première extrémité (10a) et la seconde extrémité (10b) de la came (10), dans lequel la première extrémité (11a) de ce corps de base (11) forme la première extrémité (10a) de la came (10) et dans lequel ce corps de base (11) comprend une rainure (12) centralement entre sa première extrémité (11a) et sa seconde extrémité (11b) et **en ce que** la came (10) comprend un bras de réglage (13) qui peut être fixé de manière ajustable, à sa première extrémité (13a), dans la rainure précitée (12) et est raccordé de manière rigide, à sa seconde extrémité (13b), à la seconde extrémité du levier (8) et est raccordé à pivotement à la seconde extrémité (11b) du corps de base (11).

4. Dispositif de coupe (1) selon la revendication 2 ou la revendication 3, **caractérisé en ce que** la courroie transporteuse déplaçable (4) comprend une buse ajustable (14) qui fait partie des moyens de déplacement (14, 15), dans lequel la seconde tige d'entraînement (9) des moyens de transfert (7, 8, 9, 10) est raccordée à pivotement, à sa première extrémité (9a), à cette buse ajustable (14).

5. Dispositif de coupe (1) selon l'une quelconque des revendications 2 à 4, **caractérisé en ce que** la came (10) est raccordée de manière rigide au levier (8) au moyen d'un axe de rotation (15) qui est raccordé de manière rigide à la came (10), d'une part, et est raccordé de manière rigide au levier (8), d'autre part, dans lequel cet axe de rotation (15) s'étend en travers de la came (10) et en travers du levier (8).

6. Dispositif de coupe (1) selon l'une quelconque des revendications précédentes, **caractérisé en ce que** la lame de coupe (2) est réglée à rotation par rapport à un axe de rotation (5).

7. Dispositif de coupe (1) selon l'une quelconque des revendications précédentes, **caractérisé en ce que** la courroie transporteuse ajustable (4) est conçue sous la forme d'une courroie modulaire.

8. Dispositif de coupe (1) selon l'une quelconque des revendications précédentes, **caractérisé en ce que** les moyens de transfert (7, 8, 9, 10) sont assemblés de manière que la distance entre la lame de coupe (2) et la courroie transporteuse ajustable (4) soit plus ou moins constante dans chaque position.
